# EUROPÄISCHE PATENTANMELDUNG

(11) **EP 4 140 865 A1**
(43) Veröffentlichungstag der Anmeldung: **01.03.2023**
(21) Anmeldenummer: 22191590.3
(22) Anmeldetag: 23.08.2022
(51) Int. Cl.: B62J 11/10, B62K 21/18, B62K 19/32

(54) **ZUG-FÜHRUNGSELEMENT EINES FAHRRADRAHMENS**

(30) Priorität: 27.08.2021 DE 202021104629 U
(71) Anmelder: Canyon Bicycles GmbH, 56073 Koblenz (DE)
(72) Erfinder: Anderer, Marco, 56068 Koblenz (DE); Schellenberg, Lars, 56076 Koblenz (DE); Hensolt, Matthias, 56076 Koblenz (DE); Fatkin, Johann, 56073 Koblenz (DE)
(74) Vertreter: dompatent von Kreisler Selting Werner - Partnerschaft von Patent- und Rechtsanwälten mbB

(57) **Zusammenfassung**

Ein Zug-Führungselement zur Führung von Zügen (28) wie Bowdenzügen, Hydraulikleitungen und dergleichen ist innerhalb eines Fahrradrahmens, insbesondere innerhalb eines Steuerrohrs (24) eines Fahrradrahmens angeordnet. Das Zug-Führungselement weist ein insbesondere zylindrisches Hülsenelement (10) auf. Dieses ist in montiertem Zustand innerhalb des Steuerrohrs (24) angeordnet und umgibt einen Gabelschaft (26) einer Fahrradgabel. Zur Lagedefinition zumindest eines Zuges (28) ist mit dem Hülsenelement mindestens ein Halteelement verbunden.

## Beschreibung

Die Erfindung betrifft ein Zug-Führungselement. Dies dient zur Führung von Zügen wie Bowdenzügen, Hydraulikleitungen, oder beispielsweise auch Kabeln innerhalb eines Fahrradrahmens, insbesondere innerhalb eines Steuerrohrs eines Fahrradrahmens.

Bei modernen Fahrradrahmen werden Züge, wie Bowdenzüge, Hydraulikleitungen, Kabel und dergleichen häufig innerhalb des Fahrradrahmens verlegt. So werden derartige Züge, beispielsweise ausgehend vom Lenker in das Steuerrohr des Fahrradrahmens eingeführt und sind sodann beispielsweise ausgehend von dem Steuerrohr des Fahrradrahmens in das Oberrohr oder das Unterrohr geführt. Je nach Art des Zuges ist dieser sodann beispielsweise zur Hinterradbremse, zur Schaltung, zu einem Betätigungselement für einen höhenverstellbaren Sattel oder dergleichen geführt. Das Einführen der Züge in das Steuerrohr kann beispielsweise über einen oberhalb des Steuerrohr angeordnetes Zwischenelement erfolgen oder auch über den Lenkervorbau. Bei innerhalb des Fahrradrahmens verlegten Zügen besteht die Problematik, dass der Radius der Züge nicht zu klein sein darf, um Beschädigungen der Züge zu vermeiden. Hierdurch kann ein Abrieb oder anderweitige Beschädigung der Züge vermieden werden.

Aufgabe der Erfindung ist es ein Zug-Führungselement zu schaffen, mit dem einerseits eine leichte Montage von Zügen ermöglicht ist und/oder die Gefahr der Beschädigung von Zügen innerhalb des Fahrradrahmens verringert ist.

Die Lösung der Aufgabe erfolgt erfindungsgemäß durch ein Zug-Führungselement mit den Merkmalen des Anspruchs 1.

Das erfindungsgemäße Zug-Führungselement dient zur Führung von Zügen, wie Bowdenzügen, Hydraulikzügen oder auch Leitungen innerhalb eines Fahrradrahmens, insbesondere innerhalb eines Steuerrohrs eines Fahrradrahmens. Das erfindungsgemäße Zug-Führungselement weist ein Hülsenelement auf. Dieses ist in montiertem Zustand innerhalb des Steuerrohrs derart angeordnet, dass es den Gabelschaft vorzugsweise vollständig umgibt, somit insbesondere in Umfangsrichtung den Gabelschaft vollständig umgibt. Erfindungsgemäß ist mit dem Hülsenelement mindestens ein Halteelement verbunden, insbesondere einstückig ausgebildet. Das Haltelement dient zur Lagedefinition zumindest eines Zuges. Vorzugsweise ist das Hülsenelement zylindrisch, insbesondere kreiszylindrisch ausgebildet und weist einen Innendurchmesser auf, der geringfügig größer als der Außendurchmesser des Gabelschafts ist.

In besonders bevorzugter Ausführungsform ist das Zug-Führungselement auf dem Gabelschaft frei drehbar angeordnet. Hierbei tritt ggf. eine geringe Reibung zwischen dem Gabelschaft und einer Innenfläche des Zug-Führungselements auf. Dies führt zu einem geringen Mitdrehen des Zug-Führungselements beim Lenken. Um bei den auftretenden Relativbewegungen zwischen der Innenseite des Zug-Führungselements und der Außenseite des Gabelschafts Beschädigungen am Gabelschaft zu vermeiden, kann ein den Gabelschaft umgebendes Zwischenelement angeordnet sein. Beispielsweise ist als Zwischenelement mit dem Gabelschaft ein zylindrisches Element fest verbunden, so dass die Relativbewegung zwischen diesem zylindrischen Element und dem Zug-Führungselement stattfindet. Hierdurch ist es möglich, geringe Reibwerte zu realisieren. Als zylindrisches Zwischenelement kann am Gabelschaft ein Aufkleber aus geeignetem Material, insbesondere Kunststoff angeordnet werden.

Ein Vorteil der Erfindung besteht darin, dass durch das erfindungsgemäße Zug-Führungselement einerseits die Montage der Züge erleichtert ist und/oder auch die Gefahr des Beschädigens der Züge verringert ist. Dies liegt einerseits darin begründet, dass die Züge in einem zu kleinen Biegeradius verlaufen. Zusätzlich weist das erfindungsgemäße Zug-Führungselement den Vorteil auf, dass die Züge in einem definierten Biegeradius, zumindest in einem gewissen Bereich von Biegeradien angeordnet werden. Insofern ist auch vermieden, dass beispielsweise sehr steife Züge einen zu großen Biegeradius aufweisen, und insbesondere steife Züge wie Hydraulikleitungen und dergleichen, eine definierte Lage aufweisen. Hierdurch ist das Auftreten von Verschleiß weiter minimiert.

Durch das erfindungsgemäße Zug-Führungselement ist somit einerseits ein Beschädigen des Gabelschafts und vorzugsweise auch ein Beschädigen der verlegten Züge vermieden. Insbesondere durch die definierte Lage der Züge erfolgt kein vollständig freies Verlegen der Züge innerhalb des Rahmens. Dies kann zu Beschädigungen der Züge führen. Beispielsweise bei Rahmen aus Aluminium sind innerhalb der Rahmenrohre offene Schnittkanten oder Vorsprünge vorhanden, die scharfkantig sein können. Insbesondere durch das Vorsehen von mindestens einem Halteelement kann die Lage von Zügen eindeutig definiert werden.

Vorzugsweise verlaufen die Züge in montiertem Zustand im Wesentlichen parallel zur Längsachse des Gabelschaftes. Vorzugsweise weisen die Züge in montiertem Zustand zur Längsachse des Gabelschaftes einen Winkel von weniger als 30° und insbesondere weniger als 20° auf.

Des Weiteren ist es bevorzugt, dass das Hülsenelement in montiertem Zustand innerhalb des Steuerrohrs des Fahrradrahmens angeordnet ist. Das mindestens eine Halteelement ist somit in bevorzugter Ausführungsform zwischen dem Gabelschaft und dem Steuerrohr angeordnet. Insbesondere ist das gesamte Hülsenelement zusammen mit den Halteelementen innerhalb des Steuerrohrs angeordnet und insofern von außen nicht sichtbar.

Vorzugsweise sind mit dem Hülsenelement mehrere Halteelemente verbunden. Hierdurch können mehrere Züge auf einfache Weise in ihrer Lage durch unterschiedliche Halteelemente definiert werden.

Besonders bevorzugt ist es ferner, dass das mindestens eine Halteelement an einer Außenseite der Hülse angeordnet ist. Die Züge verlaufen somit in bevorzugter Ausführungsform entlang einer Außenseite des Hülsenelements und sodann von dem Halteelement gehalten bzw. in einer entsprechenden Lage fixiert. Hierdurch ist insbesondere vermieden, dass die Züge eine Außenseite des Gabelschafts berühren und hierdurch beschädigt werden. Insbesondere kann eine durch Lenken zwischen den Zügen und dem Gabelschaft auftretende Relativbewegungen dazu führen, dass die Außenseite der Züge beschädigt wird.

Des Weiteren ist es bevorzugt, dass beim Vorsehen mehrerer Halteelemente zumindest zwei Halteelement einander gegenüberliegend, insbesondere an der Außenseite des Hülsenelements angeordnet sind. In montiertem Zustand sind diese beiden Halteelemente in Fahrtrichtung auf der linken oder rechten Seite des Hülsenelements angeordnet. Hierdurch ist es auf einfache Weise möglich Züge, die von der linken Seite des Lenkers kommen, an der linken Außenseite des Hülsenelements entlang zu dem linken Halteelement zu führen. Dies erfolgt entsprechend für auf der rechten Seite angeordnete Züge.

Ferner ist es bevorzugt, dass die Halteelemente in montiertem Zustand etwa in der Mitte des Steuerrohrs angeordnet sind. Ausgehend von der Mitte kann die Lage der Halteelemente um weniger als ±20mm, insbesondere weniger als ±10mm variieren. Gegebenenfalls können auch unterschiedliche Halteelemente auf unterschiedlichen Höhen des Hülsenelements vorgesehen sein. Wenn beispielsweise Züge im Oberrohr angeordnet werden sollen, kann ein in montiertem Zustand höheres Halteelement vorgesehen sein als für Züge, die in ein Unterrohr des Rahmens geführt werden. Insbesondere ist es bevorzugt, dass zumindest ein Teil der Halteelemente im montiertem Zustand in etwa in der Mitte des Steuerrohrs angeordnet ist. Des Weiteren ist es bevorzugt, dass insbesondere derartige Halteelemente im Bereich eines unteren Endes des Hülsenelements angeordnet sind.

Vorzugsweise ist das mindestens eine Halteelement derart ausgebildet, dass es eine Durchführöffnung aufweist. Insbesondere handelt es sich um eine in Umfangsrichtung vollständig geschlossene Öffnung, so dass ein Herausrutschen des Zuges vermieden ist. Hierbei kann das Halteelement generell in sich geschlossen sein, so dass der Zug durchgeführt werden muss oder das Halteelement weist beispielsweise ein klappbares scharnierähnliches Element auf, um geschlossen werden zu können. Hierdurch wäre ein einfacheres Einführen des Zuges möglich.

Besonders bevorzugt ist es, dass das mindestens eine Halteelement an einer Außenseite des Hülsenelements angeordnet ist. Insbesondere ist das mindestens eine Halteelement fest mit dem Hülsenelement verbunden und besonders bevorzugt einstückig mit diesem ausgebildet, wobei vorzugsweise mehrere Hülsenelemente vorgesehen sein können.

Des Weiteren ist es bevorzugt, dass das mindestens eine Halteelement über Verbindungsstege mit dem Hülsenelement, insbesondere einer Außenseite des Hülsenelements verbunden ist. Vorzugsweise ist eine Außenseite der Verbindungsstege derart ausgebildet, dass sie im Wesentlichen stufenfrei an einer Au-βenseite der Hülse übergeht. Durch einen derartig fließenden Übergang ist ein Beschädigen anderer Bauteile während der Montage oder während des Betriebs vermieden.

Des Weiteren betrifft die Erfindung ein Zug-Führungssystem. Dieses weist ein Steuerrohr eines Fahrradrahmens sowie ein innerhalb des Steuerrohrs des Fahrradrahmens angeordneten Gabelschaft einer Fahrradgabel auf. Ferner ist ein den Gabelschaft zumindest teilweise umgebendes Zug-Führungselement vorgesehen. Dieses ist wie vorstehend beschrieben vorteilhaft aus- und weitergebildet.

Nachfolgend wird die Erfindung anhand einer bevorzugten Ausführungsform unter Bezugnahme auf die anliegenden Zeichnungen näher erläutert.

Es zeigen:
- Figur 1: eine schematische perspektivische Ansicht eines erfindungsgemäßen Zug-Führungselements und
- Figur 2: eine schematische Seitenansicht eines in einem Steuerrohr montiertem Zug-Führungselements gemäß Figur 1.

Das erfindungsgemäße Zug-Führungselement weist ein im dargestellten Ausführungsbeispiel kreiszylindrisches Hülsenelement 10 auf. An einer Außenseite 12 des Hülsenelements 10 sind im dargestellten Ausführungsbeispiel zwei Halteelemente 14 angeordnet. Die beiden Halteelemente 14 weisen jeweils eine Durchgangsöffnung 16 zum Hindurchführen von Zügen auf.

Die beiden Halteelemente 14 sind über jeweils zwei stegförmige Elemente 18 mit der Außenseite 12 des Hülsenelements 10 verbunden. Die stegförmigen Elemente 18 weisen eine Außen 20 auf, die insbesondere tangential oder zumindest stufenfrei in die Außenseite 12 des Hülsenelements übergeht.

Bezogen auf eine Fahrtrichtung 22 sind die beiden Halteelemente 14 einander gegenüberliegend auf einer linken bzw. rechten Außenseite des Hülsenelements 10 angeordnet.

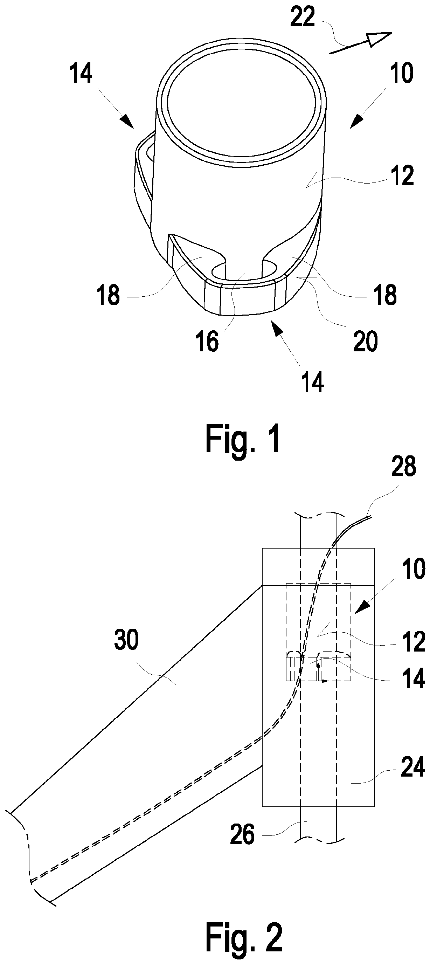

In montiertem Zustand (Figur 2) ist das Zug-Führungselement innerhalb eines Steuerrohrs 24 angeordnet. In dem Steuerrohr 24 des Fahrradrahmens ist ferner ein Gabelrohr 26 einer Fahrradgabel angeordnet. Das Zug-Führungselement umgibt den Gabelschaft 26. Ein schematisch dargestellter Zug 28 verläuft, ausgehend von einem Fahrradlenker, beispielsweise innerhalb eines nicht dargestellten Vorbaus in das Steuerrohr 24. Hierbei liegt der Zug 28 zunächst an einer Außenseite 12 des Hülsenelements 10 an und ist sodann durch die Durchgangsöffnung 16 des Halteelements 14 hindurchgeführt. Abschließend verläuft der Zug 28 mit einem ausreichend großen Radius in ein mit dem Steuerrohr 24 verbundenes Oberrohr 30.

## Patentansprüche

1. Zug-Führungselement zur Führung von Zügen (28), wie Bowdenzügen, Hydraulikleitungen und dergleichen innerhalb eines Fahrradrahmens, insbesondere innerhalb eines Steuerrohrs (24) eines Fahrradrahmens, mit
einem Hülsenelement (10), das in montiertem Zustand den Gabelschaft (26) vorzugsweise vollständig umgibt und
mindestens einem mit dem Hülsenelement (10) verbundenen Halteelement (14) zur Lagedefinition zumindest eines Zuges (28).

2. Zug-Führungselement nach Anspruch 1, **dadurch gekennzeichnet, dass** die Züge (28) in montiertem Zustand im Wesentlichen parallel zu einer Längsachse des Gabelschafts verlaufen, wobei die Züge (28) vorzugsweise zur Längsachse des Gabelschafts einen Winkel von weniger als 30°, insbesondere weniger als 20° aufweisen.

3. Zug-Führungselement nach Anspruch 1 oder 2, **dadurch gekennzeichnet, dass** das Hülsenelement (10) zusammen mit dem mindestens einen Halteelement (14) innerhalb des Steuerrohrs (24) in montiertem Zustand angeordnet ist.

4. Zug-Führungselement nach ein der Ansprüche 1 bis 3, **dadurch gekennzeichnet, dass** mehrere Halteelemente (14) mit dem Hülsenelement (10) verbunden sind.

5. Zug-Führungselement nach einem der Ansprüche 1 bis 4, **dadurch gekennzeichnet, dass** das mindestens eine Halteelement (14) an einer Außenseite (12) des Hülsenelements (10) angeordnet ist.

6. Zug-Führungselement nach einem der Ansprüche 1 bis 5, **dadurch gekennzeichnet, dass** zumindest zwei Halteelemente (14) einander gegenüberliegend angeordnet sind.

7. Zug-Führungselement nach einem der Ansprüche 1 bis 6, **dadurch gekennzeichnet, dass** das mindestens eine Halteelement (14) in montiertem Zustand etwa in der Mitte des Gabelschafts (24) bei einer Abweichung von insbesondere weniger als ±20mm und besonders bevorzugt weniger als ±10mm angeordnet ist.

8. Zug-Führungselement nach einem der Ansprüche 1 bis 7, **dadurch gekennzeichnet, dass** das mindestens eine Halteelement (14) eine Durchführöffnung (16) zum Hindurchführen zumindest eines Zuges (28) aufweist.

9. Zug-Führungselement nach einem der Ansprüche 1 bis 8, **dadurch gekennzeichnet, dass** das mindestens eine Halteelement (14) mit einer Außenseite (12) des Hülsenelements (10) verbunden ist.

10. Zug-Führungselement nach einem der Ansprüche 1 bis 9, **dadurch gekennzeichnet, dass** das mindestens eine Halteelement (14) Verbindungsstege (18) zum Verbinden mit dem Hülsenelement (10), insbesondere der Au-βenseite (12) des Hülsenelements (10) aufweist.

11. Zug-Führungselement nach Anspruch 10, **dadurch gekennzeichnet, dass** die Verbindungsstege (18) eine Außenseite (20) aufweisen, die im Wesentlichen stufenfrei in die Außenseite (12) des Hülsenelements (10) übergeht.

12. Zug-Führungssystem, mit einem Steuerrohr (24) eines Fahrradrahmens,
einen innerhalb des Steuerrohrs (24) angeordneten Gabelschaft (26) einer Fahrradgabel und
einem den Gabelschaft (26) umgebenden Zug-Führungselement nach einem der Ansprüche 1 bis 11.
